(19) Europäisches Patentamt
European Patent Office
Office européen des brevets

(11) **EP 2 521 295 A2**

(12) **EUROPEAN PATENT APPLICATION**

(43) Date of publication:
**07.11.2012 Bulletin 2012/45**

(51) Int Cl.:
*H04L 1/00* (2006.01)　　*H04W 28/10* (2009.01)
*H04N 7/24* (2011.01)　　*H04N 21/2343* (2011.01)
*H04N 21/236* (2011.01)　　*H04N 21/2381* (2011.01)
*H04N 21/2383* (2011.01)　　*H04N 21/2662* (2011.01)
*H04N 21/434* (2011.01)　　*H04N 21/438* (2011.01)
*H04N 21/61* (2011.01)　　*H04N 21/6336* (2011.01)
*H04N 21/643* (2011.01)

(21) Application number: **11168491.6**

(22) Date of filing: **14.10.2008**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **15.10.2007 US 999040 P**
　　　　　**15.10.2007 US 998978 P**
　　　　　**15.10.2007 US 998961 P**

(62) Document number(s) of the earlier application(s) in accordance with Art. 76 EPC:
**08838766.7 / 2 201 775**

(27) Previously filed application:
**14.10.2008 PCT/US2008/011707**

(71) Applicant: **Thomson Licensing**
**92130 Issy-les-Moulineaux (FR)**

(72) Inventors:
　• **Citta, Richard**
　　**Oak Park, IL 60302 (US)**

　• **Virag, David**
　　**Noblesville, IL 46062 (US)**
　• **Canfield, Barth**
　　**Indianapolis, IL 46236 (US)**

(74) Representative: **Amor, Rim**
**Technicolor SA**
**Intellectual Property & Licensing**
**European Patent Opearations**
**1, rue Jeanne D'Arc**
**92443 Issy-les-Moulineaux (FR)**

<u>Remarks:</u>
　•This application was filed on 01-06-2011 as a divisional application to the application mentioned under INID code 62.
　•Claims 20 to 23 are deemed to be abandoned due to non-payment of the claims fees (Rule 45(3) EPC).

(54) **High definition television transmission with mobile capability**

(57)　A method and architecture for processing signal communications between an encoder and decoder operating according to the ATSC standard adapted for mobile handheld transmission is disclosed. The method and apparatus comprises embedding code rate identifiers in the packet ID and training sequences, using a chirp sequence as a training sequence and transmitting data in a single burst wherein the data is encoded according to multiple code rates.

*FIG. 1*

**Description**

<u>Priority Claim</u>

This application claims the benefit of United States Provisional Patent Application No. 60/998,978 entitled "High Definition Television Transmission with Mobile Capability" and No. 60/999,040 entitled "Physical Layer Control Block for Mobile VSB Submission" and No. 60/998,961 entitled "High Definition Television Transmission Including a Mode For Mobile Operation", which are incorporated herein by reference.

<u>Field of the Invention</u>

The present invention relates to transmitting data in a multimode transmission system. In particular, the present invention relates to a transmission system wherein multiple code rates can be used in data transmission within a single standard transmission protocol, such as ATSC.

<u>Background of the Invention</u>

Over the past decades, video transmission systems have migrated from analog to digital formats. In the United States, broadcasters are in the final stages of completing the switch from the National Television System Committee (NTSC) analog television system, to the Advanced Television Systems Committee (ATSC) A/53 digital television system. The A/53 standard provides "specification of the parameters of the system including the video encoder input scanning formats and the preprocessing and compression parameters of the video encoder, the audio encoder input signal format and the pre-processing and compression parameters of the audio encoder, the service multiplex and transport layer characteristics and normative specifications, and the VSB RF/Transmission subsystem." The A/53 standard defines how source data (e.g., digital audio and video data) should be processed and modulated into a signal that is to be transmitted over the air. This processing adds redundant information to the source data so that a receiver may recover the source data even if the channel adds noise and multipath interference to the transmitted signal. The redundant information added to the source data reduces the effective rate at which the source data is transmitted, but increases the potential for successful recovery of the source data from a received signal.

The ATSC A/53 standard development process was focused on HDTV and fixed reception. The system was designed to maximize video bit rate for the large high resolution television screens that were already beginning to enter the market. Transmissions broadcast under the ATSC A/53 standard, however, present difficulties for mobile receivers. Enhancements to the standard are required for robust reception of digital television signals by mobile devices.

Recognizing this fact, in 2007, the ATSC announced the launch of a process to develop a standard that would enable broadcasters to deliver television content and data to mobile and handheld devices via their digital broadcast signal. Multiple proposals were received in response. The resulting standard, to be called ATSC-M/H, is intended to be backwards compatible with ATSC A/53, allowing operation of existing ATSC services in the same RF channel without an adverse impact on existing receiving equipment.

Many systems for transmission to mobile devices, such as some proposed ATSC-M/H systems, perform periodic transmission. Such systems can include a preamble in their transmissions in order to assist with receiver system operation. Preambles typically include known information that portions of the receiving system may use for training to improve reception, which can be particularly useful in difficult environments such as those found in mobile operation. Such systems may further encode data at differing code rates. The code rate or information rate of a forward error correction (FEC) code, for example a convolutional code, states what portion of the total amount of information that is non redundant. The code rate is typically a fractional number. If the code rate is k/n, for every k bits of useful information, the coder generates totally n bits of data, of which n-k are redundant.

A common problem in multimode transmission systems including a mode that may be periodic, and may further include multiple possible transmission protocols such as code rates, is identification of transmission protocol within the transmission signal, thereby providing significant advantages to the receiving system. Providing identification typically reduces the efficiency of the data transmission by either requiring a separate data channel or implementing a receiver which attempts to decode the incoming data at each possible code rate until the suitable code rate is found. This is a time consuming effort, which prevents the timely acquisition of data, especially in a system where the code rate may change continuously during a data stream. Therefore, a system indicating the code rate to be used in decoding the data, It is desirable to find an identification system that does not impact efficiency. thereby avoiding the need to attempt to decode all the possible code rates is desired. The present invention described herein addresses this and/or other problems.

## Summary of the Invention

In accordance with an aspect of the present invention, a method for processing an signal is disclosed. According to an exemplary embodiment a method for encoding data comprises the steps of encoding said data in a first format and packetizing said data in a packet, said packet comprising said data and a packet identifier; said packet identifier comprising an indicator indicating said first format.

In accordance with another aspect of the present invention a method of processing a signal is disclosed. According to an exemplary embodiment, the method for decoding data comprises the steps of receiving a packet comprising data and a packet identifier, determining a code rate in response to a portion of said packet identifier and decoding said data according to said code rate.

## Description of the Drawings

FIG. 1 is a block diagram of an embodiment of a terrestrial broadcast transmitter for mobile/handheld reception of the present disclosure;
FIG. 2 is a block diagram of an embodiment of a portion of an exemplary mobile/handheld data stream of the present disclosure;
FIG. 3 is a block diagram of an embodiment of an exemplary data frame of the present disclosure;;
FIG. 4 is a block diagram of an embodiment of a terrestrial broadcast receiver for mobile/handheld reception of the present disclosure;
FIG. 5 is a block diagram of an embodiment of a decoder of the present disclosure;
FIG. 6 is a block diagram of another embodiment of a decoder of the present disclosure;
FIG. 7 is a state diagram of an exemplary embodiment of a method of encoding according to the present invention.
Fig. 8 is a state diagram of an exemplary embodiment of a method of decoding according to the present invention.
FIG. 9 is a state diagram of an additional exemplary embodiment of a method of encoding according to the present invention.
Fig. 10 is a state diagram of an additional exemplary embodiment of a method of decoding according to the present invention.
FIG. 11 is a state diagram of an additional exemplary embodiment of a method of encoding according to the present invention.
Fig. 12 is a state diagram of an additional exemplary embodiment of a method of decoding according to the present invention.
FIG. 13 is a state diagram of an additional exemplary embodiment of a method of encoding according to the present invention.
Fig. 14 is a state diagram of an additional exemplary embodiment of a method of decoding according to the present invention.
FIG. 15 is a state diagram of an additional exemplary embodiment of a method of encoding according to the present invention.

The exemplifications set out herein illustrate preferred embodiments of the invention, and such exemplifications are not to be construed as limiting the scope of the invention in any manner.

## Description of the Preferred Embodiment

As described herein, the present invention provides a method and apparatus for enabling insertion of a code rate identifier in a transmission subsystem for mobile digital television, such as a proposed ATSC-M/H system, while allowing backward compatibility with legacy transmission and reception paths, such as ATSC A/53. While this invention has been described as having a preferred design, the present invention can be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains and which fall within the limits of the appended claims. For instance, the described technique could be applicable to transmission systems designed for other types of data or that use different coding, error-correction, redundancy, interleaving, or modulation schemes.

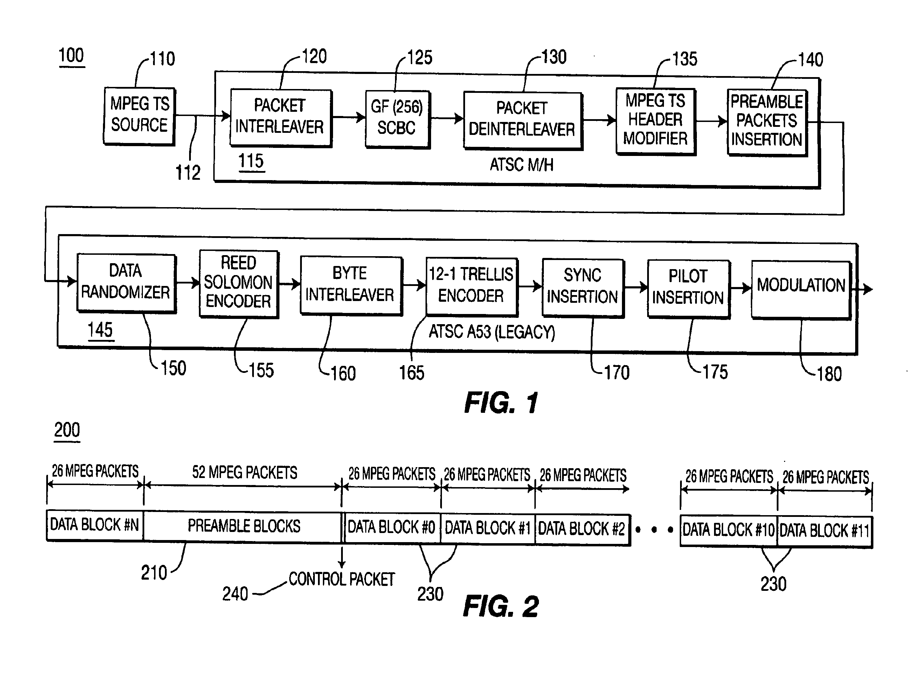

Referring now to the drawings, and more particularly to FIG. 1, a block diagram of an embodiment of a terrestrial broadcast transmitter for mobile/handheld reception of the present disclosure is shown. Embodiment 100 of FIG. 1 comprises a plurality of signal transmitting means such as an MPEG Transport stream source 110, an ATSC M/H preprocessing path 115, and a legacy ATSC A/53 processing path. The elements within the ATSC-M/H preprocessing 115 comprise a packet interleaver 120, a serial concatenated block coder 125, a packet deinterleaver 130, an MPEG transport stream header modifier 135, a preamble packet inserter 140. The legacy ATSC A/53 processing path 145 comprises a data randomizer 150, a reed Solomon encoder 155, a byte interleaver 160, a trellis encoder 165, a sync inserter 170, a pilot inserter 175 and a modulator 180.

In the ATSC-M/H preprocessing flow, incoming MPEG transport data 112 from an MPEG transport stream source 110 is received at the packet interleaver 120. The packet interleaver 120 rearranges a sequenced number of bytes into a different sequence to improve bit error rate and frame error rate performance. In this exemplary embodiment, the packet interleaver 120 takes the bytes from a fixed number of consecutive packets in a row by row order, and outputs the bytes column by column. In this way, all of the first bytes of the packets are grouped together, all of the second bytes of the packets are grouped together, and so on until the last bytes of the packets. Each source packet is an MPEG transport stream packet with the sync byte removes, so each packet length is 187 bytes. The number of packets in each code frame is the same as the number of source symbols required for the GF(256) serial concatenated block code.

The interleaved data is then coupled to the GF(256) serial concatenated block coder (SCBC) 125. The SCBC 125 codes the packet interleaved data in one of a plurality of forms depending on the desired data rate and the codeword length. The SCBC 125 consists of one or more constituent GF(256) codes cascaded in a serial fashion, linked by GF(256) code optimized block interleavers to improve overall code performance. This may be optionally followed by a GF(256) puncture to achieved desired codeword length.

The data is then coupled to a packet deinterleaver 130. The packet deinterleaver 130 takes the bytes from the resulting SCBC codewords for the original group of packets in a column-by-column order, and outputs the bytes in a row by row order. The original packets are reconstituted and new packets are created from the parity bytes of the SCBC codewords. Each packet corresponds to a common GF(256) symbol location in all the created SCBC codewords. The number of packets created in each code frame is nSCBC, where the first kSCBC packets are the original data packets and the last (nSCBC - kSCBC) packets are parity packets.

The data is then coupled to the MPEG TS header modifier 135 where the MPEG headers are modified. The MPEG TS header modifier may modify the packet Identifier (PID) of the MPEG transport stream headers to indicate the code rate used by the error correction scheme. The code rates is expressed as a fraction of the original number of data bytes over the total number of data bytes used. For example, in a 12/52 rate mode, which supplements 12 data bytes with 40 parity bytes, each group of 12 bytes uses one R=1/2 Encoder, and two R=12/26 Encoders, with each 12/26 Encoder using two R=2/3 Encoders and one 27/26 puncture, results in a 12/52 rate mode The R=27/26 puncture is performed in such a way that the last byte of the 27 bytes is dropped. Two Data Blocks are used to transmit 12 MPEG TS packets under the 12/52 Rate Mode. The 12/26 rate mode supplements 12 data bytes with 14 parity bytes, each group of 12 data bytes uses two R=2/3 Encoders, and one R=27/26 puncture, results in a 12/26 rate mode. The R=27/26 puncture shall be performed in such a way that the last byte of the 27 bytes is dropped. One Data Block is used to transmit 12 MPEG TS packets under the 12/26 Rate Mode.The17/26 rate mode supplements 17 data bytes with 9 parity bytes, each group of 17 data bytes group uses one R=2/3 Encoder to supplement 16 data bytes with 8 parity bytes, and one R=1/2 Encoder to supplement 1 data byte with 1 parity byte, results in a 17/26 rate mode. One Data Block is used to transmit 17 MPEG TS packets under the 17/26 Rate Mode. The 24/208 rate mode supplements 24 data bytes with 184 parity bytes, each group of 24 data bytes uses 24 R=1/4 Encoders, and eight 12/26 Encodes, results in a 24/208 rate mode. The R=27/26 puncture shall be performed in such a way that the last byte of the 27 bytes is dropped. Eight Data Blocks are used to transmit 24 MPEG TS packets under the 24/208 Rate Mode.

Each packet utilizing the MPEG protocol typically contains a packet identification portion or PID. The current system allows for over 8000 possible unique identification elements, and at present, only 50 are used. The PID is typically one or more bytes of information used for identifying the type of data in the packet. At present many of the PID portions of the bits remain reserved and unused. These PIDs can be used to identify a specific error correction code rate that will be imposed on the packet. Certain rules based on MPEG protocol should be maintained in order to assure the PID is properly identified by any receiving system. A three-byte header 440 contains a 13-bit packet identifier (PID) identifying the packet as part of a mobile/handheld transmission. The headers 440 of MPEG packets from the ATSC-M/H stream are modified after packet-deinterleaving to contain packet identifiers (PIDs) that are not recognized by legacy ATSC A/53 receivers. Thus, a legacy receiver should ignore the ATSC-M/H specific data, providing backward compatibility.

This data is then coupled to the Preamble packet inserter 140, where preamble packets consisting of consecutive MPEG packets are formed into a preamble block. The MPEG packets are formed with a valid MPEG header with data bytes generated from a PN generator (not shown). The number of data bytes generated from the PN generator varies with the code rate used, for example, 184 data bytes are generated in 12/52 rate mode to result in a total of 2208 bytes of PN data. According to an exemplary embodiment, the PN generator is a 16-bit shift register with 9 feedback taps. 8 of the shift register outputs are selected as the output byte. ATSC M/H packets are placed in between Preamble blocks in Data Blocks. Every Data Block contains 26 ATSC M/H encoded packets that have the same coding or 26 ATSC A/53 encoded packets. Once the preamble packets have been inserted 140, the ATSC M/H stream has been formed.

The ATSC-M/H data stream is then processed by the legacy ATSC A/53 path 145, including data randomizer 150, Reed-Solomon encoder 155, byte interleaver 160, 12-1 trellis encoder 165, sync insertion 170, pilot insertion 175, and modulation 180. In the data randomizer 150, each byte value is changed according to known pattern of pseudo-random number generation. This process is reversed in the receiver in order to recover the proper data values. With the exception of the segment and field syncs, it is desirable for the 8-VSB bit stream to have a completely random, noise-like nature to afford the transmitted signal frequency response must have a flat noise-like spectrum in order to use the allotted channel space with maximum efficiency.

The data is then coupled to the Reed-Solomon encoder 155, where Reed-Solomon (RS) coding provides additional error correction potential at the receiver through the addition of additional data to the transmitted stream. In an exemplary embodiment, the RS code used in the VSB transmission system is a t = 10 (207,187) code. The RS data block size is 187 bytes, with 20 RS parity bytes added for error correction. A total RS block size of 207 bytes is transmitted per RS code word. In creating bytes from the serial bit stream, the MSB shall be the first serial bit and the 20 RS parity bytes are sent at the end of the data block or RS code word.

The byte interleaver 160 then processes the output of the Reed-Solomon encoder 155. Interleaving is a common technique for dealing with burst errors that can occur during transmission. Without interleaving, a burst error could have a large impact on one particular segment of the data, thereby rendering that segment uncorrectable. If the data is interleaved prior to transmission, however, the effect of a burst error can be effectively spread across multiple data segments. Rather than large errors being introduced in one localized segment that cannot be corrected, smaller errors may be introduced in multiple segments that are each separately within the correction capabilities of forward error correction, parity bit, or other data integrity schemes. For instance, a common (255, 223) Reed-Solomon code will allow correction of up to 16 symbol errors in each code word. If the Reed-Solomon coded data is interleaved before transmission, a long error burst is more likely to be spread across multiple codewords after deinterleaving, reducing the chances that more than the correctable 16 symbol errors are present in any particular codeword.

The interleaver employed in a VSB transmission system is a 52 data segment (intersegment) convolutional byte interleaver. Interleaving is provided to a depth of about 1/6 of a data field (4 ms deep). Only data bytes are interleaved. The interleaver is synchronized to the first data byte of the data field. Intrasegment interleaving is also performed for the benefit of the trellis coding process.

The signal is then coupled to the Trellis encoder 165. Trellis coding is another form of Forward Error Correction. Unlike Reed-Solomon coding, which treats the entire MPEG-2 packet simultaneously as a block, trellis coding is an evolving code that tracks the progressing stream of bits as it develops through time. Accordingly, Reed-Solomon coding is known as a form of block code, while trellis coding is a convolutional code.

In ATSC trellis coding, each 8-bit byte is split up into a stream of four, 2-bit words. In the trellis coder, each 2-bit word that arrives is compared to the past history of previous 2-bit words. A 3-bit binary code is mathematically generated to describe the transition from the previous 2-bit word to the current one. These 3-bit codes are substituted for the original 2-bit words and transmitted over-the-air as the eight level symbols of 8-VSB (3 bits = 8 combinations or levels). For every two bits that go into the trellis coder, three bits come out. For this reason, the trellis coder in the 8-VSB system is said to be a 2/3 rate coder. The signaling waveform used with the trellis code is an 8-level (3 bit) one-dimensional constellation. The transmitted signal is referred to as 8 VSB. A 4-state trellis encoder shall be used.

In an exemplary embodiment, trellis code intrasegment interleaving is used. This uses twelve identical trellis encoders and precoders operating on interleaved data symbols. The code interleaving is accomplished by encoding symbols (0, 12, 24 36 ...) as one group, symbols (1, 13, 25, 37, ...) as a second group, symbols (2, 14, 26, 38, ...) as a third group, and so on for a total of 12 groups.

Once the data has been trellis encoded, it is coupled to the sync inserter 170. The sync inserter 170 is a multiplexer which inserts the various synchronization signals (Data Segment Sync and Data Field Sync). A two-level (binary) 4-symbol Data Segment Sync is inserted into the 8-level digital data stream at the beginning of each Data Segment. The MPEG sync byte is replaced by Data Segment Sync. In an exemplary embodiment using ATSC transmission standards, a complete segment shall consist of 832 symbols: 4 symbols for Data Segment Sync, and 828 data plus parity symbols. The same sync pattern occurs regularly at 77.3 s intervals, and is the only signal repeating at this rate. Unlike the data, the four symbols for Data Segment Sync are not Reed-Solomon or trellis encoded, nor are they interleaved. The ATSC segment sync is a repetitive four symbol (one byte) pulse that is added to the front of the data segment and replaces the missing first byte (packet sync byte) of the original MPEG-2 data packet. Correlation circuits in the 8-VSB receiver home in on the repetitive nature of the segment sync, which is easily contrasted against the background of completely random data. The recovered sync signal is used to generate the receiver clock and recover the data. Segment syncs are easily recoverable by the receiver because of their repetitive nature and extended duration. Accurate clock recovery can be had at noise and interference levels well above those where accurate data recovery is impossible allowing for quick data recovery during channel changes and other transient conditions.

After sync insertion, the signal is coupled to the pilot insertion where a small DC shift is applied to the 8-VSB baseband signal causing a small residual carrier to appear at the zero frequency point of the resulting modulated spectrum. This ATSC pilot signal gives the RF PLL circuits in the 8-VSB receiver a signal to lock onto that is independent of the data being transmitted. The frequency of the pilot is the same as the suppressed-carrier frequency. This may be generated by a small (digital) DC level (1.25) added to every symbol (data and sync) of the digital baseband data plus sync signal (+1, +3, +5,+7). The power of the pilot is typically 11.3 dB below the average data signal power.

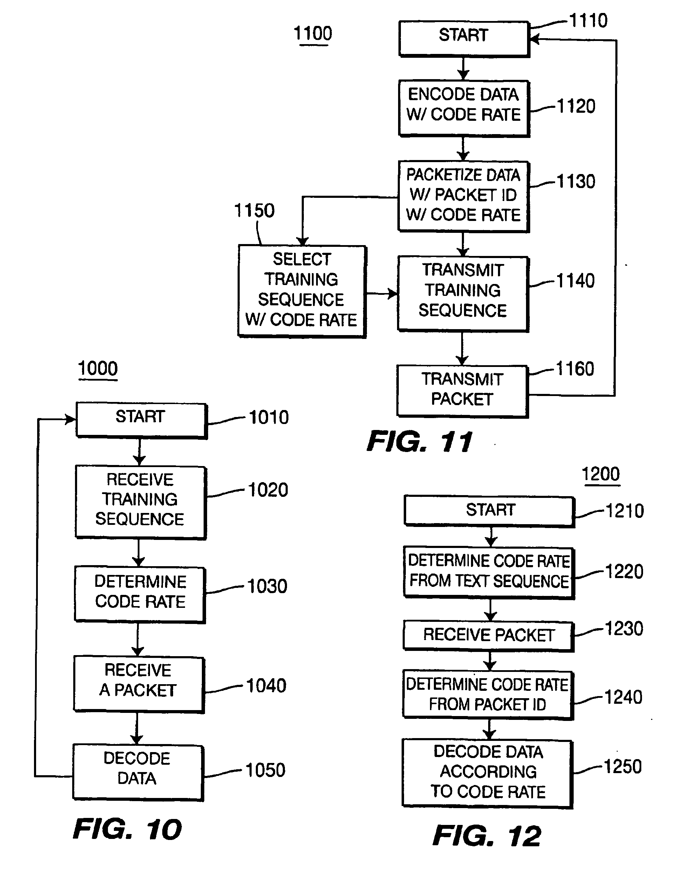

After the pilot signal is inserted, the data is coupled to the modulator 180. The modulator amplitude modulates the 8 VSB baseband signal on an intermediate frequency (IF) carrier. With traditional amplitude modulation, we generate a double sideband RF spectrum about our carrier frequency, with each RF sideband being the mirror image of the other. This represents redundant information and one sideband can be discarded without any net information loss. In 8 VSB modulation, the VSB modulator receives the 10.76 Msymbols/s, 8-level trellis encoded composite data signal (pilot and sync added). The ATV system performance is based on a linear phase raised cosine Nyquist filter response in the concatenated transmitter and receiver, as shown in Figure 12. The system filter response is essentially flat across the entire band, except for the transition regions at each end of the band. Nominally, the roll-off in the transmitter shall have the response of a linear phase root raised cosine filter.

The transmission system includes operation for mobile and portable devices in a burst mode of transmission. Several key advantages of operating in burst mode, are described throughout the above document and include ability to be received by a new class of devices while still maintaining backward compatibility. These new classes of devices require a lower level of video resolution than is found in the existing broadcast standard, and can therefore also allow higher coding and compression, as well as other features including working in the presence of higher noise levels. An additional advantage of burst mode types of operation is focused on the potential device power savings by focusing use of the device only when signals intended for the device or to be received.

Burst mode operations such as those described may take advantage of time periods during which high data transmission of a signal is not required in order to maintain full performance of a legacy system and receiver. Burst mode operation may be based on processing signals based on a so-called new information processing rate, which may change depending on the current broadcast signal characteristics.

Backward compatibility with the legacy system is maintained by focusing the burst mode operations at a data packed level by introducing information for new program identifiers. The new program identifiers allow the new class of equipment to recognize the data, without affecting the operation of existing equipment. Further legacy support exists by including an Overlay structure in order to maintain legacy signal transmission operation during certain burst mode profiles.

Referring to FIG. 2, a block diagram of an embodiment of a portion of an exemplary mobile/handheld data stream 200 of the present disclosure is shown. 26 ATSC M/H coded packets are grouped into 1 Data Block. In legacy ATSC transmission every Data Block typically has the same coding, although this is not physically required. Preamble blocks are two blocks long and have 52 coded. The very first MPEG packet following the Preamble block is a control packet that contains system information. Following randomization and forward error correction processing, the data packets are formatted into Data Frames for transmission and Data Segment Sync and Data Field Sync are added.

The ATSC-M/H data stream 200 is made up of bursts having a Preamble block 210 followed by a predetermined number of Data Blocks 230 appropriate for the selected data rate mode. According to the exemplary embodiment, each Data Block 230 consists of 26 MPEG packets. Each Data Frame consists of two Data Fields, each containing 313 Data Segments. The first Data Segment of each Data Field is a unique synchronizing signal (Data Field Sync) and includes the training sequence used by the equalizer in the receiver. The remaining 312 Data Segments each carry the equivalent of the data from one 188-byte transport packet plus its associated FEC overhead. The actual data in each Data Segment comes from several transport packets because of data interleaving. Each Data Segment consists of 832 symbols. The first 4 symbols are transmitted in binary form and provide segment synchronization. This Data Segment Sync signal also represents the sync byte of the 188-byte MPEG-compatible transport packet. The remaining 828 symbols of each Data Segment carry data equivalent to the remaining 187 bytes of a transport packet and its associated FEC overhead. These 828 symbols are transmitted as 8-level signals and therefore carry three bits per symbol. Thus, 828 x 3 = 2484 bits of data are carried in each Data Segment, which is the requirement to send a protected transport packet:

The ATSC M/H data stream consists of a sequence of blocks, each block consisting of 26 packets of the legacy VSB A/53 system. The ATSC M/H data stream is made up of bursts of blocks that each burst has a Preamble block followed by Nb Data Blocks, where Nb is a system variable parameter and a function of the overall ATSC M/H data rate to be transmitted. Each Data Block is encoded at one of the defined ATSC M/H rate modes. This rate mode is applied to the entire Data Block. For each burst of blocks, the Data Blocks are delivered such that the highest coded FEC rates (i.e. the lowest fractional numbers) in the burst of blocks will be delivered earliest and the lowest coded FEC rates (i.e. the highest fractional numbers) will be delivered the latest such that starting from a Preamble block, any following Data Blocks will have equal or less robustness than the current Data Block. ATSC A/53 8VSB coded legacy Data Blocks of 26 packets can be placed at one or more block for legacy overlay operation.

An enhancement to the ATSC or ATSC M/H transmission protocols that may be especially advantageous to handheld or portable devices is the use of data packets of different coding within the same burst, such as, a Base layer transmitted at one code rate and enhanced layer transmitted at a higher rate. Under this scheme, a laptop, for example, would combine the two to show enhanced video, but a cellular telephone may only show the base layer. This is advantageous as devices which require more robust coding often have lower resolution displays. In an exemplary embodiment according to the present invention, the handheld data stream 200 comprising preamble blocks 210 and data blocks 230. Data blocks 0 and 1 may be coded at 1/4 for base layer and blocks 10 and 11 coded at 1/2 for enhanced layer. Thus different code rates are transmitted in the same burst.

In addition, a chirp signal can be used as a sequence for training the equalizer. Pattern interference is a problem when NTSC signals are being transmitted, but with the discontinued use of NTSC signals, the fixed pattern chirp signal will be acceptable. A chirp is a signal in which the frequency increases ('up-chirp') or decreases ('down-chirp') with time. It is commonly used in sonar and radar, but has other applications, such as in spread spectrum communications. In spread spectrum usage, SAW devices such as RACs are often used to generate and demodulate the chirped signals. A linear chirp waveform is a sinusoidal wave that increases in frequency linearly over time.

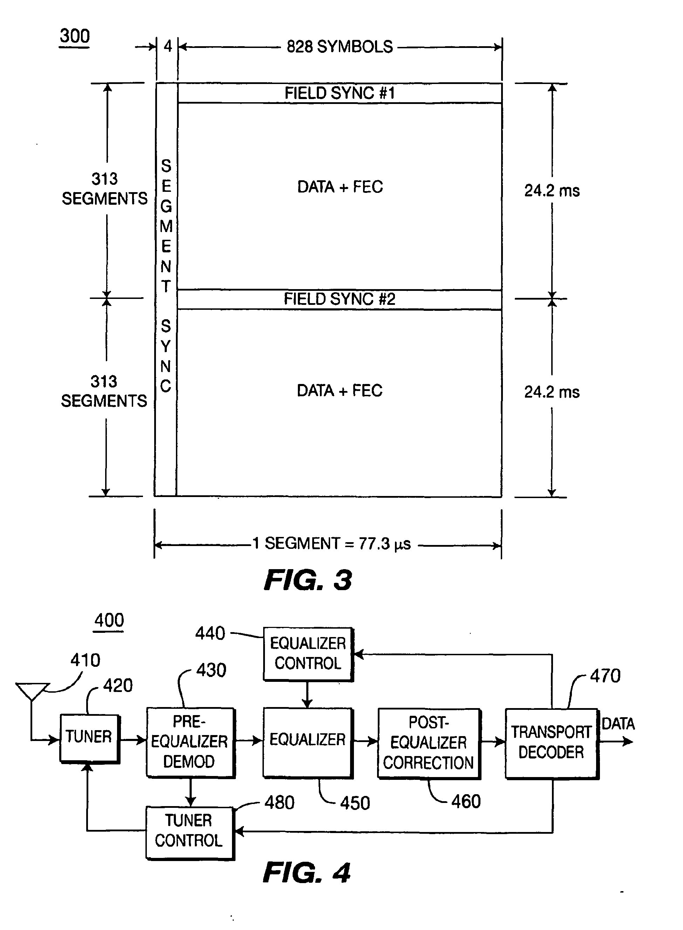

Turning now to FIG. 3, a data frame 300 is shown according to the present invention is shown. The data frame 300 shown is organized for transmission where each Data Frame consists of two Data Fields, each containing 313 Data Segments. The first Data Segment of each Data Field is a unique synchronizing signal (Data Field Sync) and includes the training sequence used by the equalizer in the receiver. The remaining 312 Data Segments each carry the equivalent of the data from one 188-byte transport packet plus its associated FEC overhead. The actual data in each Data Segment comes from several transport packets because of data interleaving. Each Data Segment consists of 832 symbols. The first 4 symbols are transmitted in binary form and provide segment synchronization. This Data Segment Sync signal also represents the sync byte of the 188-byte MPEG-compatible transport packet. The remaining 828 symbols of each Data Segment carry data equivalent to the remaining 187 bytes of a transport packet and its associated FEC overhead. These 828 symbols are transmitted as 8-level signals and therefore carry three bits per symbol. Thus, 828 x 3 = 2484 bits of data are carried in each Data Segment, which exactly matches the requirement to send a protected transport packet:

$$187 \text{ data bytes} + 20 \text{ RS parity bytes} = 207 \text{ bytes}$$

$$207 \text{ bytes} \times 8 \text{ bits/byte} = 1656 \text{ bits}$$

$$2/3 \text{ rate trellis coding requires } 3/2 \times 1656 \text{ bits} = 2484 \text{ bits.}$$

The exact symbol rate is given by equation 1 below:

$$(1) \qquad S_r \text{ (MHz)} = 4.5/286 \times 684 = 10.76... \text{ MHz}$$

The frequency of a Data Segment is given in equation 2 below:

$$(2) \qquad f_{seg} = S_r / 832 = 12.94... \times 10^3 \text{ Data Segments/s.}$$

The Data Frame rate is given by equation (3) below:

$$(3) \qquad f_{frame} = f_{seg}/626 = 20.66 ... \text{ frames/s.}$$

The symbol rate $S_r$ and the transport rate $T_r$ shall be locked to each other in frequency.

The 8-level symbols combined with the binary Data Segment Sync and Data Field Sync signals is used to suppressed-carrier modulate a single carrier. Before transmission, however, most of the lower sideband shall be removed. The resulting spectrum is flat, except for the band edges where a nominal square root raised cosine response results in 620 kHz transition regions. At the suppressed-carrier frequency, 310 kHz from the lower band edge, a small pilot is added to the signal as described previously.

Turning now to FIG. 4, an embodiment of a terrestrial broadcast receiver 400 for mobile/handheld reception of the present disclosure is shown. The receiver 400 comprises a signal receiving element 410, a tuner 420, a pre-equalizer demodulator 430, a equalizer controller 440, an equalizer 450, a post-equalizer correction processor 460, a transport decoder 470 and a tuner controller 480.

The signal receiving element 410 is operative to receive signals including audio, video, and/or data signals (e.g., television signals, etc.) from one or more signal sources, such as a satellite broadcast system and/or other type of signal broadcast system. According to an exemplary embodiment, signal receiving element 410 is embodied as an antenna such as a log periodic antenna, but may also be embodied as any type of signal receiving element. The antenna 410, of this exemplary embodiment, is operative to receive ATSC M/H terrestrially transmitted audio, video, and data signals over a frequency bandwidth. ATSC signals are generally transmitted over the frequency range of 54 to 870MHz, with a bandwidth of anywhere from approximately 6 MHz per channel. Sub channels may be time multiplexed The signal is coupled from the antenna vie a transmission line such as a coaxial cable or printed circuit board trace.

The Tuner 420 is operative to perform a signal tuning function responsive to a control signal from the tuner controller 480. According to an exemplary embodiment, the tuner 420 receives an RF signal from the antenna 410, and performs the signal tuning function by filtering and frequency down converting (i.e., single or multiple stage down conversion) the RF signal to thereby generate an intermediate frequency (IF) signal. The RF and IF signals may include audio, video and/or data content (e.g., television signals, etc.), and may be of an analog signal standard (e.g., NTSC, PAL, SECAM, etc.) and/or a digital signal standard (e.g., ATSC, QAM, QPSK, etc.). The tuner 420 is operative to convert the received ATSC M/H signal from the carrier frequency to an intermediate frequency. For example, the tuner may convert a 57 MHz signal received at the antenna 410 to a 43 MHz IF signal. The Pre-Equalizer Demodulator 430 is operative to demodulate the IF signal from the Tuner 420, to a baseband digital stream. The baseband digital stream then coupled to the equalizer.

The tuner controller 480 is operative receive instructions from the transport decoder 470 in response to the signal level and frequency of the tuned channel or a desired tuned channel. The tuner controller 480 generates a control signal in response to these received instructions to control the tuner 420 operation.

The equalizer controller 440 is operative to generate an error term in response to the decoded data. This provides the ability for a data directed equalizer. The equalizer controller 440 estimates the error between the received data and the decoded data and generates an error term. The error term is fed to the equalizer 450 to be minimized.

The equalizer 450 is operative to receive the tuned and demodulated MPEG stream from the pre-equalizer demodulator 430 and calculates equalizer coefficients which are applied to an equalization filter within the equalizer to produce an error free signal. The equalizer 450 is operative to compensate for transmission errors, such as attenuation and intersymbol interference. The equalizer comprises a matched filter which performs roll off filtering which is operative to cancel the intersymbol interference. During the equalizer training period, a previously chosen training signal is transmitted through the channel and a properly delayed version of this signal, that is prestored in the receiver, is used as a reference signal. The training signal is usually a pseudo-noise sequence long enough to allow the equalizer to compensate for the channel distortions. The equalizer according to an exemplary embodiment of the present invention is operative to store a plurality of pseudo-noise sequences, wherein each pseudo-random sequence corresponds to a code rate. When the equalizer 450 receives the pseudorandom sequence training signal, the equalizer compares a portion of the received sequence with the plurality of stored sequences. When a match is made, the code rate associated with the received sequence is used by the decoder to decode the data received after the training sequence.

The first Data Segment of each Data Field is a synchronizing signal (Data Field Sync) that includes a training sequence used by the equalizer 450 in the receiver. As described above, an advantageous configuration may assign each pseudorandom sequence a different pattern associated with a unique code rate. The equalizer 450 will use the highest matching correlator available to identify the code rate within the preamble.

Utilization of the data segment for code rate identification, in addition to equalizer training can provide vital information for the receiver via the second mode of data delivery. A receiver equipped to receive multiple training signals requires a unique corrleator for each code rate, however, using this technique provides for a robust and efficient system. 63 symbols within the field sync pseudorandom sequence that are not defined by the ATSC standard can be configured to indicate the code rate.

Each pseudorandom sequence has a different pattern for code rate. Output of different correlators, use the highest one. The highest one identifies the code rate with the preamble. Utilization of an existing segment of the transmission system used primarily for training to also provide vital information for the second mode of data delivery. Costs a unique correlator for each code rate. Idea is that you get a robust system that is efficient.

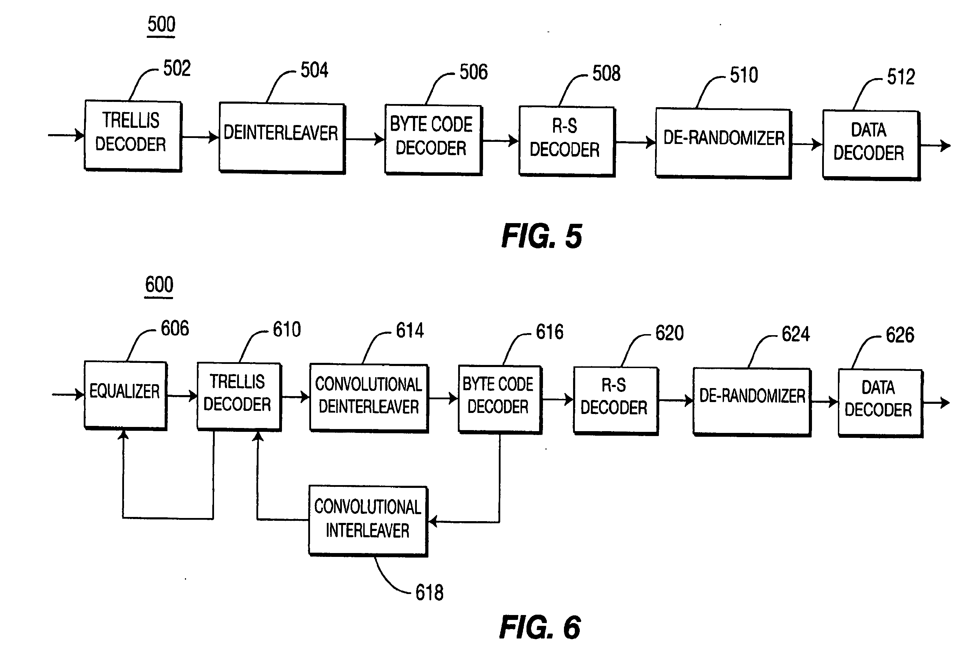

The post-equalizer correction processor 460 and transport decoder 470 are operative to perform error correction and to decode the MPEG data stream. These elements are shown and discussed in detail in FIGs. 5 and 6.

Turning now to FIG. 5, a block diagram of an embodiment of a decoder 500 used in a receiver system is shown. Decoder 500 includes circuitry that is adapted to use redundant packets, such as the non-systematic packets in a data stream as described above, to aid in decoding data received by the receiver. Decoder 500 is also generally capable of decoding data that has been encoded using the legacy or existing A53 standard.

In decoder 500, following initial tuning, demodulation, and processing by other circuits (FIG 4) a trellis decoder 502 receives the incoming signal. The trellis decoder 502 is connected to a convolutional de-interleaver 504. The output of the convolutional de-interleaver 504 is connected to a byte-code decoder 506. The byte-code decoder 506 has an output that is connected to a Reed-Solomon decoder 508. The output of the Reed-Solomon decoder 508 is connected to a de-randomizer 510. The de-randominizer 510 output is connected to a data decoder 512. The data decoder 512 provides an output signal for use in the remaining portion of the receiver system such as video display or audio reproduction.

In accordance with the existing or legacy A53 standard, the trellis decoder 502 includes a signal de-multiplexer, twelve 2/3-rate trellis decoders and a signal multiplexer. The de-multiplexer distributes the digital samples among the twelve 2/3-rate trellis decoders and the multiplexer multiplexes the estimates generated byte each of the twelve 2/3-rate trellis decoders. A de-interleaver 504, such as a convolutional interleaver, de-interleaves the stream of trellis-decoded bit estimates, producing sequences or packets arranged to include 207 bytes. The packet arrangement is performed in conjunction with the determination and identification of the location of the synchronization signals, not shown. A Reed-Solomon error correction circuit 508 considers each sequence of 207 bytes produced by the de-interleaver 504 as one or more codewords and determines if any bytes in the codewords or packets were corrupted due to an error during transmission. The determination is often performed by calculating and evaluating a set of syndromes or error patterns for the codewords. If corruption is detected, the Reed-Solomon error correction circuit 508 attempts to recover the corrupted bytes using the information encoded in the parity bytes. The resulting error-corrected data stream is then de-randomized by a de-randomizer 510 and thereafter provided to a data decoder 512 that decodes the data stream in accordance with the type of content being transmitted. Typically, the combination of the trellis decoder 502, the de-interleaver 504, the Reed-Solomon decoder 508, and the de-randomizer 510 are identified as an 8-VSB decoder within a receiver. It is important to note that, in general, the typical receiver for receiving signals compliant with the legacy A53 standard performs the receiving process in the reverse order of the transmitting process.

The received data, in the form of bytes of data in data packets, is decoded by trellis decoder 502 and de-interleaved by de-interleaver 504. The data packets may include 207 bytes of data and further may be grouped in groups or 24, 26, or 52 packets. The trellis decoder 502 and de-interleaver 20504 are capable of processing incoming legacy format data as well as byte-code encoded data. Based on a predetermined packet transmission sequence that is also known by the receiver, the byte-code decoder 506 determines if the packet is a packet included in a byte-code encoded or robust data stream. If the received packet is not from the byte-code encoded data stream then the received packet is provided to the Reed-Solomon decoder 508 without any further processing in byte-code decoder 506. Byte code decoder 506 may also include a de-randomizer that removes the known sequence of constants multiplied by or added to the data stream during encoding. It is important to note that a rugged data stream includes both systematic packets and bytes that are identical to the original data and non-systematic packets and bytes that contain redundant data.

If the byte-code decoder 506 determines that the received is a byte-code encoded packet belonging to robust or rugged data stream, the packet may be decoded along with other packets comprising the same data stream. In one embodiment, byte-code encoded packets of the same data stream are decoded by multiplying each byte within the packet by the inverse of the value of the element that was used to develop the byte-coded packet. The decoded values of the bytes of the non-systematic packet are compared to the values of the bytes of the systematic packet and the values of any bytes in the two packets that are not identical may be erased (i.e., set to zero) in the systematic packet or may be replaced by the information in the non-systematic packet. The systematic packet with error bytes erased may thereafter be decoded using Reed-Solomon decoding performed in Reed-Solomon decoder 508. Further description of other embodiments of byte-code decoders will be discussed below.

Byte code decoder 506 may also be adapted to operate as a block coder for decoding signals encoded as shown in FIG 1. For instance, byte code decoder 506 may include a packet interleaver similar to packet interleaver 120 and a packet deinterleaver similar to packet deinterleaver 130. Additionally, the byte code encoder function may be adapted to decode a GF(256) Serial Concatenated Block Coded (SCBC) signal. The byte code decoder 506 may further include an identifier block used for identifying data encoded for mobile or ATSC M/H reception and/or identification of a-priori training packets. Additionally, the identifier block may include a packet identifier block to determine, for example, if the headers in the incoming packets include a PID used for mobile reception.

It is important to note that in a preferred encoder byte-code encoding precedes the Reed-Solomon encoding of data packets. However, in decoder 500 shown here, the incoming data is byte-code decoded before being the Reed-Solomon decoded. The re-ordering is possible because both the byte-code operation and Reed-Solomon code operation are linear over the Galois Field(256) used in the A53 standard, and linear operators are commutative in a Galois Field.. It is advantageous to do block decoding first before the Reed Solomon because there are soft decoding algorithms which make it practical to have an iterative decoding algorithm. The importance of the re-ordering is important because the byte-code encoding provides a soft decoding algorithm, which then makes possible iterative decoding or turbo decoding, which has higher reliability for recovering errors in the received signal. As a result, performing byte-code decoding prior to Reed-Solomon decoding results in improved receiver performance as measured in terms of bit-error rate and signal to noise ratio

Turning now to FIG. 6, a block diagram of another embodiment of a decoder 600 used in a receiver is shown. Decoder 600 includes additional circuitry and processing for receiving and decoding signals that have been adversely affected by transmission of the signal over a transmission medium such as electromagnetic waves over the air. Decoder 600 is capable of decoding both a rugged data stream as well as a legacy data stream.

In decoder 600, the incoming signal, following initial processing, is provided to equalizer 606. Equalizer 606 is connected to trellis decoder 610, which provides two outputs. A first output from trellis decoder 610 provides feedback and is connected back as a feedback input to equalizer 606. The second output from trellis decoder 610 is connected to a convolutional de-interleaver 614. The convolutional de-interleaver 614 is connected to a byte-code decoder 616, which also provides two outputs. A first output from byte-code decoder 616 is connected back as a feedback input to trellis decoder 610 through a convolutional interleaver 618. The second output from byte-code decoder 616 is connected to a Reed-Solomon decoder 620. The output of the Reed-Solomon decoder 620 is connected to de-randomizer 624. The output of the de-randomizer 624 is connected to a data decoder 626. Reed-Solomon decoder 620, de-randomizer 624, and data decoder 626 are connected, and functionally operate, in a manner similar to Reed-Solomon, de-randomizer, and data decoder blocks described in FIG. 5 and will not be further described here.

An input signal from the front end processing (e.g. antenna, tuner, demodulator, A/D converter) of the receiver (not shown) is provided to equalizer 606. Equalizer 606 processes the received signal to completely or partially remove the transmission channel effect in an attempt to recover the received signal. The various removal or equalization methods are well known to those skilled in the art and will not be discussed here. Equalizer 506 may include multiple sections of processing circuitry including a feed-forward equalizer (FFE) section and a decision-feedback-equalizer (DFE) section.

The equalized signal is provided to trellis decoder 610. The trellis decoder 610 produces, as one output, a set of decision values that are provided to the DFE section of equalizer 606. The trellis decoder 610 may also generate intermediate decision values that are also provided to the DFE section of equalizer 606. The DFE section uses the decision values along with intermediate decision values from the trellis decoder 610 to adjust values of filter taps in equalizer 606. The adjusted filter tap values cancel interference and signal reflections that are present in the received signal. The iterative process allows equalizer 606, with the assistance of feedback from trellis decoder 610, to dynamically adjust to a potential changing signal transmission environment conditions over time. It is important to note that the iterative process may occur at a rate similar to incoming data rate of the signal, such as 19 Mb/s for a digital television broadcast signal. The iterative process also may occur at a rate higher than the incoming data rate.

The trellis decoder 610 also provides a trellis decoded data stream to convolutional de-interleaver 614. Convolutional de-interleaver 614 operates similar to the de-interleaver described in FIG. 5 generates de-interleaved bytes organized within data packets. The data packets are provided to byte-code decoder 5616. As described above, packets that are not a part of a rugged data stream are simply passed through the byte-code decoder 616 to Reed-Solomon decoder 620. If the byte-code decoder 616 identifies a group of the packets as part of a rugged data stream, the byte-code decoder 616 uses the redundant information in the non-systematic .packets to initially decode the bytes in the packets as described above.

Byte-code decoder 616 and the trellis decoder 610 operate in an iterative manner, referred to as a turbo-decoder, to decode the rugged data stream. Specifically, the trellis decoder 610 provides, after de-interleaving by convolutional de-interleaver 614, a first soft decision vector to the byte-code decoder 616 for each byte of the packets that are included in the rugged data stream. Typically, the trellis decoder 610 produces the soft decision as a vector of probability values. In some embodiments, each probability value in the vector is associated with a value that the byte associated with the vector may have. In other embodiments, the vector of probability values is generated for every half-nibble (i.e., two bits) that is contained in the systematic packet because the 2/3-rate trellis decoder estimates two-bit symbols. In some embodiments the trellis decoder 610 combines four soft decisions associated with four half-nibbles of a byte to produce one soft-decision that is a vector of the probabilities of values that the byte may have. In such embodiments, the soft-decisions corresponding to the byte is provided to the byte-code decoder 616. In other embodiments, the byte-code decoder separates a soft-decision regarding a byte of the systematic packet into four soft-decision vectors, wherein each of the four soft-decisions is associated with a half-nibble of the byte.

The byte-code decoder 616 uses the soft decision vector associated with the bytes comprising packets of the rugged data stream to produce a first estimate of the bytes that comprise the packets. The byte-code decoder 616 uses both the systematic and the non-systematic packets to generate a second soft decision vector for each byte of packets comprising the rugged stream and provides the second soft-decision vector to the trellis decoder 610, after re-interleaving by convolutional interleaver 618. The trellis decoder 610 thereafter uses the second soft-decision vector to produce a further iteration of the first decision vector, which is provided to the byte-code decoder 616. The trellis decoder 610 and the byte-code decoder 616 iterate in this fashion until the soft-decision vector produced by the trellis decoder and byte-code decoder converge or a predetermined number of iterations are undertaken. Thereafter, the byte-code decoder 616 uses the probability values in the soft-decision vector for each byte of the systematic packets to generate a hard decision for each byte of the systematic packets. The hard decision values (i.e., decoded bytes) are output from the byte-code encoder 616 to Reed-Solomon decoder 620. The trellis decoder 610 may be implemented using a Maximum a Posteriori (MAP) decoder and may operate on either byte or half-nibble (symbol) soft decisions.

It is important to note that turbo-decoding typically utilizes iteration rates related to passing decision data between blocks that are higher than the incoming data rates. The number of possible iterations is limited to the ratio of the data rate and the iteration rate. As a result and to the extent practical, a higher iteration rate in the turbo-decoder generally improves the error correction results. In one embodiment, an iteration rate that is 8 times the incoming data rate may be used.

A soft input soft output byte-code decoder such as described in FIG. 6 may include vector decoding functions. Vector decoding involves grouping bytes of the data including systematic and non-systematic bytes. For example, for a rate 1/2 byte code encoded stream, 1 systematic and 1 non-systematic byte will be grouped. The two bytes have over 64,000 possible values. The vector decoder determines or estimates a probability for each of the possible values of the two bytes and creates a probability map. A soft decision is made based on a weighting the probabilities of some or all of the possibilities and the Euclidean distance to a possible codeword. A hard decision may be made when the error of the Euclidean distance falls below a threshold.

Byte-code decoders, as described in FIG.s 5 and 6 may decode a rugged data stream that has been encoded by the byte-code encoders described earlier, including encoding by simple byte-code encoders or concatenated byte-code encoders. The byte-code decoders in FIG.s 5 and 6 describe decoding a rugged data stream encoded by a simple or constituent byte-code encoder involving only a single encoding step. Concatenated byte-code decoding includes decoding the incoming codewords or bytes in more than one decoding step in addition to intermediate processing such as de-interleaving, de-puncturing, and re-insertion.

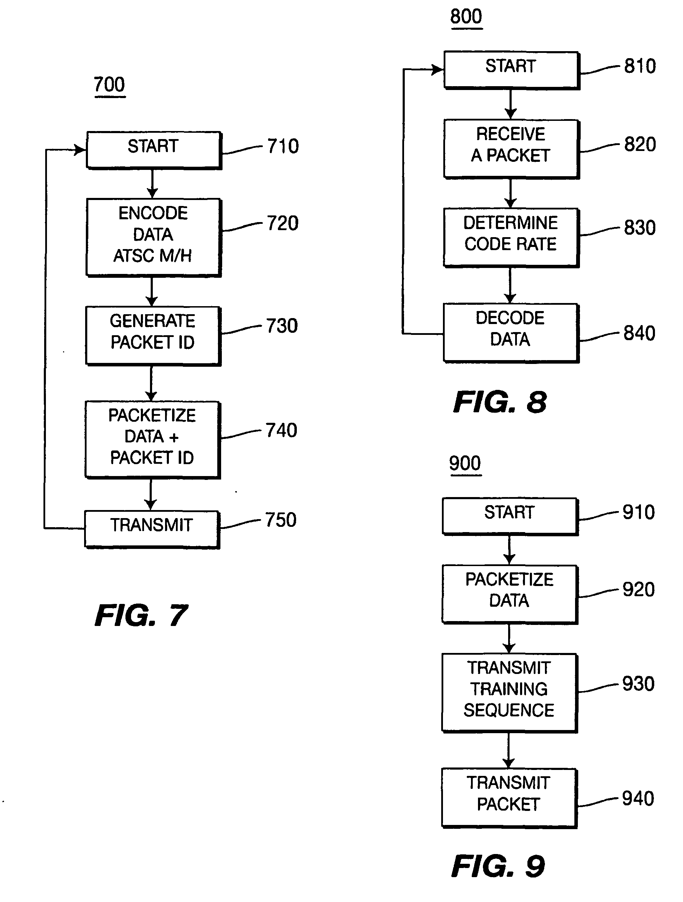

Referring now to FIG. 7, a state diagram of an exemplary embodiment of a method of encoding according to the present invention is shown. The method 700 for encoding data according to an exemplary embodiment of the present invention comprises the following states. First, the device enters a wait state to start 710. The device then encodes the data into a first format 720 wherein the first format may be a VSB or QAM format and encoded according to a code rate. The code rate indicates the number of redundant packets generated by the encoder compared to the number of data packets encoded. The device then generates a packet ID 730. The device then packetizes the data and the packet ID in a packet 740. The device then transmits the packet 750 and returns to the wait state 710..

Referring now to FIG. 8, a state diagram of an exemplary embodiment of a method 800 of decoding according to the present invention is shown. The device first enters a wait state where it waits to receive a packet 810. The device then receives a packet comprising data and a packet identifier 820. The device then proceeds to determine a code rate in response to a portion of said packet identifier 830. The device, if appropriately equipped then decodes the data within the packet according to said code rate 840. The device then returns to the wait state.

Referring now to FIG. 9, a state diagram of an exemplary embodiment of a method 900 of encoding according to the present invention is shown. The device first enters a wait state where it waits for data to encode 910. After receiving data, the device encodes said data according to one of a plurality of code rates 910. The device then packetizes the data for transmission 920. The device encodes a training sequence where the training sequence indicative of said one of a plurality of code rates. The device then transmits the training sequence 930. The device then transmits the 940. An encoder operative according to this method may comprise a processor for generating a training sequence and a packet, said packet comprising at least one data, said at least one data encoded according to a first format, and wherein said training sequence being indicative of said first format.

Referring now to FIG. 10, a state diagram of an exemplary embodiment of a method 1000 of decoding according to the present invention is shown. The device first enters a wait state where it waits to receive a training sequence 1010, The device then receives a training sequence 1020. Upon receiving the training sequence, the device determines a code rate in response to a portion of said training sequence 1020. In an exemplary embodiment, each code rate is associated with a unique training sequence. When the device, such as a receive or a decoder, receives the unique training sequence, it can associate the training sequence with a stored code rate, thereby facilitating the device to anticipate the code rate any incoming data to be received shortly. The device then receives the packet comprising data 1040. The device then decodes the data according to the code rate determined from the training sequence 1050. A decoder according to the method would comprise a processor for receiving a training sequence and a packet, said packet comprising at least one data, said processor being further operative to identify a code rate associate with said training sequence and to decode said at least one data in accordance with said to a code rate.

Referring now to FIG. 11, a state diagram of an exemplary embodiment of a method 1100 of encoding according to the present invention is shown. The device first enters a wait state where it waits for data to encode 1110. Upon receiving the data, the device encodes the data according to a code rate 1120. The device then generates a packet, where the packet comprising said data and a packet identifier. 1120 The packet identifer comprising an indicator indicating said one of a plurality of code rates. The device then generates a training sequence, said training sequence indicative of said one of a plurality of code rates 1150. The device then optionally transmits, or couples to a transmitter, the training sequence for transmission 1140. The device then optionally transmits, or couples to a transmitter, the packet for transmission 1150. The device may then optionally return to the wait state 1110. An encoder operative according to the described method may comprise a processor for generating a training signal and a packet, said packet comprising a packet identifier and data frame, said data frame encoded according to a first format, and wherein a portion of said packet identifier indicative of said first format and said training signal being indicative of said first format.

Referring now to FIG. 12, a state diagram of an exemplary embodiment of a method 1200 of decoding according to the present invention is shown. The device receives the training sequence 1210. The device then determines a code rate according to the training sequence 1220. This determination can be made mathematically, or through a look up table by comparing the received training sequence to a stored training sequence and then, upon a match, determined the code rate associated with the stored training sequence. The device then receives a packet comprising data and a packet identifier 1230. The device then determines a code rate in response to at least one of a portion of said training sequence and a portion of said packet identifier 1240. The device then decodes the data according to said code rate. 1250 The device can the optionally return to the wait state 1210. A decoder operative according to the described method may comprise a processor operative to receive a training sequence and a packet, said packet comprising a packet identifier, said processor further operative to decode data in accordance with a code rate, said code rate determined in response to at least one of said training sequence and said packet identifier for processing a packet, said packet comprising at least one data and a packet identifier.

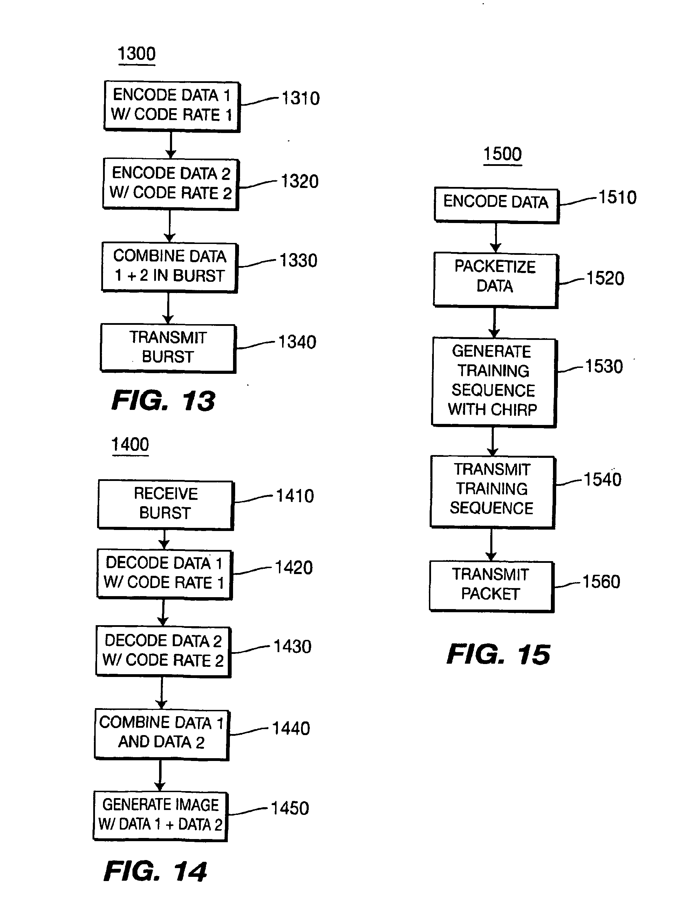

Referring now to FIG. 13, a state diagram of an exemplary embodiment of a method 1300 of encoding according to the present invention is shown. Upon receiving data to encode, the device first encodes a first portion of said data at a first code rate 1310. The device then encodes a second portion of said data at a second code rate 1320. The device then encodes said first portion of data and said second portion of data within a first burst 1330. The device is then operative to transmit 1340, or couple to a transmitter, the burst. An encoder operative to perform this method may comprise a processor operative to encode a first portion of said data at a first code rate and a second portion of said data at a second code rate and to encode said first portion of data and said second portion of data into a first burst.

Referring now to FIG. 14, a state diagram of an exemplary embodiment of a method 1400 of decoding according to the present invention is shown. The device first receives a burst 1410. The device is then operative to decoding a first portion of said data according to a first code rate 1420. The device may optionally then decode a second portion of said data according to a second code rate 1430. The device may then combine the first data and the second data 1440. This combined data may optionally be used to generate an image 1450. A decoder operative to implement this method may comprise a processor operative to receive a burst comprising data, to decode a first portion of said data according to a first code rate, and to decode a second portion of said data according to a second code rate.

A burst is any relatively high-bandwidth transmission over a short period of time. For example, a download might use 2 Mbit/s on average, whilst have "peaks" bursting up to, say, 2.4 Mbit/s. A burst may also be a transmission that combines a very high data signaling rate with very short transmission times - i.e., the message is compressed. This has the desirable advantage of allowing the receiver to turn on only during burst periods, thus saving power over an operational time period. This is especially advantageous in handheld and portable devices, such as ATSC M/H receivers and processors.

Operation of a data network in which data transmission is interrupted at intervals. Referring now to FIG. 15, a state diagram of an exemplary embodiment of a method 1500 of encoding according to the present invention is shown. The device first encodes data according to a data format, such as 8 VSB or QAM 1510. The device then packetizes the data according to a transmission format, such as ATSC M/H 1520. The device then generates a training sequence comprising a chirp pattern 1530. The device then transmits, or couples to a transmitter, the training sequence 1540. The device then transmits, or couples to a transmitter, the packet 1550. An apparatus operative to implement this method may comprise a processor operative to generate a training sequence comprising a chirp pattern and a transmitter for transmitting said training sequence.

A decoder for receiving the above transmitted training sequence may comprise an equalizer for filtering a training signal and a data stream, said training signal comprising a chirp pattern, an equalizer controller for controlling said equalizer and for adjusting at least one equalizer weight in response to said training sequence and a decoder for decoding said data stream. The decoder may decode the signal by receiving a training sequence; said training sequence comprising a chirp pattern, adjusting at least one equalizer weight in response to said training sequence, receiving a packet comprising data; and decoding said data according to said code rate.

A chirp is a signal in which the frequency increases ('up-chirp') or decreases ('down-chirp') with time. It is commonly used in sonar and radar, but has other applications, such as in spread spectrum communications. In spread spectrum usage, SAW devices such as RACs are often used to generate and demodulate the chirped signals. In optics, ultrashort laser pulses also exhibit chirp due to the dispersion of the materials they propagate through. A linear chirp waveform; a sinusoidal wave that increases in frequency linearly over time In a linear chirp, the instantaneous frequency $f(t)$ varies linearly with time: $f(t) = f0 + kt$ where f0 is the starting frequency (at time $t = 0$), and k is the rate of frequency increase or chirp rate.

In a geometric chirp, also called an exponential chirp, the frequency of the signal varies with a geometric relationship over time. In other words, if two points in the waveform are chosen, t1 and t2, and the time interval between them t2 - t1 is kept constant, the frequency ratio f(t2)/f(t1) will also be constant. In an exponential chirp, the frequency of the signal varies exponentially as a function of time: f(t) = f0kt where f0 is the starting frequency (at t = 0), and k is the rate of exponential increase in frequency. Unlike the linear chirp, which has a constant chirp rate, an exponential chirp has an exponentially increasing chirp rate.

While the present invention has been described in terms of a specific embodiment, it will be appreciated that modifications may be made which will fall within the scope of the invention. For example, various processing steps may be implemented separately or combined, and may be implemented in general purpose or dedicated data processing hardware. Furthermore, various encoding or compression methods may be employed for video, audio, image, text, or other types of data. Also, the packet sizes, rate modes, block coding, and other information processing parameters may be varied in different embodiments of the invention.

**Claims**

1. A method for encoding data comprising the steps of:

   encoding said data in a first format; and
   packetizing said data in a packet, said packet comprising said data and a packet identifier; said packet identifier comprising an indicator indicating said first format.

2. The method of claim 1 wherein said first format corresponds to a code rate.

3. A method of receiving data comprising the steps of;
   receiving a packet comprising data and a packet identifier;
   determining a code rate in response to a portion of said packet identifier; and decoding said data according to said code rate.

4. A decoder comprising;
   a processor for receiving a packet, said packet comprising at least one data and a packet identifier, said processor further operative to decode said at least one data in response to a code rate identifier within said packet identifier.

5. An encoder comprising;
   a processor for generating a packet, said packet comprising a packet identifier and at least one data, said data encoded according to a first format, and wherein a portion of said packet identifier indicative of said first format; and
   a transmitter for transmitting said packet.

6. A method for encoding data comprising the steps of:

   encoding said data according to one of a plurality of code rates; and
   encoding a training sequence, said training sequence indicative of said one of a plurality of code rates.

7. A method of receiving data comprising the steps of;
   receiving a training sequence;
   determining a code rate in response to a portion of said training sequence; receiving a packet comprising data; and
   decoding said data according to said code rate.

8. A decoder comprising;
   a processor for receiving a training sequence and a packet, said packet comprising at least one data, said processor being further operative to identify a code rate associate with said training sequence and to decode said at least one data in accordance with said to a code rate.

9. An encoder comprising;
   a processor for generating a training sequence and a packet, said packet comprising at least one data, said at least one data encoded according to a first format, and wherein said training sequence being indicative of said first format.

**10.** A method for encoding data comprising the steps of:

encoding said data according to one of a plurality of code rates;
generating a packet, said packet comprising said data and a packet identifier;
said packet identifier comprising an indicator indicating said one of a plurality of code rates; and
generating a training sequence, said training sequence indicative of said one of a plurality of code rates.

**11.** A method of receiving data comprising the steps of;
receiving a training sequence;
receiving a packet comprising data and a packet identifier; and
determining a code rate in response to at least one of a portion of said training sequence and a portion of said packet identifier; and
decoding said data according to said code rate.

**12.** A decoder comprising;
a processor operative to receive a training sequence and a packet, said packet comprising a packet identifier, said processor further operative to decode data in accordance with a code rate, said code rate determined in response to at least one of said training sequence and said packet identifier
for processing a packet, said packet comprising at least one data and a packet identifier.

**13.** An encoder comprising;
a processor for generating a training signal and a packet, said packet comprising a packet identifier and data frame, said data frame encoded according to a first format, and wherein a portion of said packet identifier indicative of said first format and said training signal being indicative of said first format.

**14.** A method of encoding data comprising the steps of:

- encoding a first portion of said data at a first code rate;
- encoding a second portion of said data at a second code rate;
- encoding said first portion of data and said second portion of data within a first burst.

**15.** A method of receive data comprising the steps of:

- receiving a burst comprising data
- decoding a first portion of said data according to a first code rate; and
- decoding a second portion of said data according to a second code rate.

**16.** The method of claim 15 further comprising the step of combining said decoded first portion of data and said decoded second portion of data into a first image.

**17.** A decoder comprising;
a processor operative to receive a burst comprising data, to decode a first portion of said data according to a first code rate, and to decode a second portion of said data according to a second code rate.

**18.** The decoder of claim 17 further operative to combine said decoded first portion of data and said decoded second portion of data into a first image.

**19.** An encoder for encoding data comprising;
a processor operative to encode a first portion of said data at a first code rate and a second portion of said data at a second code rate and to encode said first portion of data and said second portion of data into a first burst.

**20.** A method for encoding data comprising the steps of:

encoding a training sequence comprising a chirp pattern.

**21.** A method of receiving data comprising the steps of;
receiving a training sequence; said training sequence comprising a chirp pattern; adjusting at least one equalizer weight in response to said training sequence; receiving a packet comprising data; and

decoding said data according to said code rate.

22. An apparatus comprising;

- an equalizer for filtering a training signal and a data stream, said training signal comprising a chirp pattern;
- an equalizer controller for controlling said equalizer and for adjusting at least one equalizer weight in response to said training sequence; and
- a decoder for decoding said data stream..

23. An apparatus comprising;
a processor operative to generate a training sequence comprising a chirp pattern; and
a transmitter for transmitting said training sequence.

100

110 MPEG TS SOURCE

112

115

120 PACKET INTERLEAVER

125 GF (256) SCBC

130 PACKET DEINTERLEAVER

135 MPEG TS HEADER MODIFIER

140 PREAMBLE PACKETS INSERTION

ATSC M/H

145

150 DATA RANDOMIZER

155 REED SOLOMON ENCODER

160 BYTE INTERLEAVER

165 12-1 TRELLIS ENCODER

170 SYNC INSERTION

175 PILOT INSERTION

180 MODULATION

ATSC A53 (LEGACY)

*FIG. 1*

200

26 MPEG PACKETS — DATA BLOCK #N

52 MPEG PACKETS — PREAMBLE BLOCKS

26 MPEG PACKETS — DATA BLOCK #0

26 MPEG PACKETS — DATA BLOCK #1

26 MPEG PACKETS — DATA BLOCK #2

230

240 CONTROL PACKET

210

26 MPEG PACKETS — DATA BLOCK #10

26 MPEG PACKETS — DATA BLOCK #11

230

*FIG. 2*

16

300

|← 4 →|←——————— 828 SYMBOLS ———————→|

FIELD SYNC #1

313 SEGMENTS

S
E
G
M
E
N
T

DATA + FEC

24.2 ms

FIELD SYNC #2

S
Y
N
C

313 SEGMENTS

DATA + FEC

24.2 ms

|←——————— 1 SEGMENT = 77.3 μs ———————→|

*FIG. 3*

400

410

420

440 — EQUALIZER CONTROL

430

470

TUNER → PRE-EQUALIZER DEMOD → EQUALIZER → POST-EQUALIZER CORRECTION → TRANSPORT DECODER → DATA

480

450

460

TUNER CONTROL

*FIG. 4*

**FIG. 5**

**FIG. 6**

EP 2 521 295 A2

## FIG. 7

_700_

START — 710

↓

ENCODE
DATA
ATSC M/H — 720

↓

GENERATE
PACKET ID — 730

↓

PACKETIZE
DATA +
PACKET ID — 740

↓

TRANSMIT — 750

**FIG. 7**

## FIG. 8

_800_

START — 810

↓

RECEIVE
A PACKET — 820

↓

DETERMINE
CODE RATE — 830

↓

DECODE
DATA — 840

**FIG. 8**

## FIG. 9

_900_

START — 910

↓

PACKETIZE
DATA — 920

↓

TRANSMIT
TRAINING
SEQUENCE — 930

↓

TRANSMIT
PACKET — 940

**FIG. 9**

1100

START ~1110

ENCODE DATA W/ CODE RATE ~1120

PACKETIZE DATA W/ PACKET ID W/ CODE RATE ~1130

1150

SELECT TRAINING SEQUENCE W/ CODE RATE

TRANSMIT TRAINING SEQUENCE ~1140

TRANSMIT PACKET ~1160

**FIG. 11**

1000

START ~1010

RECEIVE TRAINING SEQUENCE ~1020

DETERMINE CODE RATE ~1030

RECEIVE A PACKET ~1040

DECODE DATA ~1050

**FIG. 10**

1200

START ~1210

DETERMINE CODE RATE FROM TEXT SEQUENCE ~1220

RECEIVE PACKET ~1230

DETERMINE CODE RATE FROM PACKET ID ~1240

DECODE DATA ACCORDING TO CODE RATE ~1250

**FIG. 12**

1300

```
ENCODE DATA 1
W/ CODE RATE 1      ──1310
        │
        ▼
ENCODE DATA 2
W/ CODE RATE 2      ──1320
        │
        ▼
COMBINE DATA
1 + 2 IN BURST      ──1330
        │
        ▼
TRANSMIT
BURST              ──1340
```

### FIG. 13

1400

```
RECEIVE
BURST              ──1410
        │
        ▼
DECODE DATA 1
W/ CODE RATE 1     ──1420
        │
        ▼
DECODE DATA 2
W/ CODE RATE 2     ──1430
        │
        ▼
COMBINE DATA 1
AND DATA 2         ──1440
        │
        ▼
GENERATE IMAGE
W/ DATA 1 + DATA 2 ──1450
```

### FIG. 14

1500

```
ENCODE DATA        ──1510
        │
        ▼
PACKETIZE
DATA               ──1520
        │
        ▼
GENERATE
TRAINING
SEQUENCE           ──1530
WITH CHIRP
        │
        ▼
TRANSMIT
TRAINING           ──1540
SEQUENCE
        │
        ▼
TRANSMIT
PACKET             ──1560
```

### FIG. 15

**EP 2 521 295 A2**

**REFERENCES CITED IN THE DESCRIPTION**

**Patent documents cited in the description**

- US 60998978 B
- US 60999040 B
- US 60998961 B